# EUROPEAN PATENT SPECIFICATION

(11) **EP 3 670 463 B1**
(45) Date of publication and mention of the grant of the patent: **16.02.2022**
(21) Application number: 19213767.7
(22) Date of filing: 05.12.2019
(51) Int. Cl.: C03C 17/32, C03C 23/00, C09D 133/14

(54) **HYDROPHILIC SUBSTRATE AND METHOD FOR PRODUCING HYDROPHILIC SUBSTRATE**
HYDROPHILES SUBSTRAT UND VERFAHREN ZUR HERSTELLUNG DES HYDROPHILEN SUBSTRATS
SUBSTRAT HYDROPHILE ET PROCÉDÉ DE FABRICATION D'UN SUBSTRAT HYDROPHILE

(30) Priority: 21.12.2018 JP 2018239542
(43) Date of publication of application: 24.06.2020
(73) Proprietor: Sumitomo Rubber Industries, Ltd., Kobe-shi, Hyogo-ken 651-0072 (JP)
(72) Inventor: MINAGAWA, Yasuhisa, Kobe-shi, Hyogo 651-0072 (JP); TAKII, Mitsuko, Kobe-shi, Hyogo 651-0072 (JP)
(74) Representative: Manitz Finsterwald Patent- und Rechtsanwaltspartnerschaft mbB

(56) References cited:
- US-A1- 2009 226 648
- US-A1- 2018 297 889

## Description

### BACKGROUND OF THE INVENTION

### Field of the Invention

The present invention relates to a hydrophilic substrate in which a hydrophilic polymer layer is formed on a substrate surface having undergone a hydrophilization treatment, and a method for producing the hydrophilic substrate.

### Description of the Background Art

A technique of coating a substrate surface with a special polymer has been proposed to produce a tool for capturing specific cells in blood and body fluid (blood cells, cancer cells and the like existing in blood or body fluid).

US 2009/226648 A1 discloses a household glass product comprising a glass surface and a switchable hydrophobic or hydrophilic polymer coating. The surface of the substrate is prepared (roughened) by etching or leaching method. Poly(N-isopropylacrylamide) (PNIPAAM) and/or poly(N,N-diethylacrylamide) are/is used as a hydrophilic polymer.

However, some special polymers make it difficult to form a smooth surface by coating. Since irregularities on the surface influence the ability to capture specific cells, a substrate having a surface with controlled irregularities that has excellent ability to capture specific cells such as cancer cells is desired (see Japanese Translation of PCT International Application Publication No. 2005-523981).

### SUMMARY OF THE INVENTION

### [Problem to be solved by the invention]

The present invention has been made to solve the above-described problem, and an object of the present invention is to provide a hydrophilic substrate in which a hydrophilic polymer layer having controlled surface irregularities is formed, and a method for producing the hydrophilic substrate.

### [Solution to the problem]

The present invention is directed to a hydrophilic substrate in which a hydrophilic polymer layer is formed on a substrate surface having undergone a hydrophilization treatment, wherein the hydrophilic polymer layer is formed of a hydrophilic polymer represented by the following formula (I): 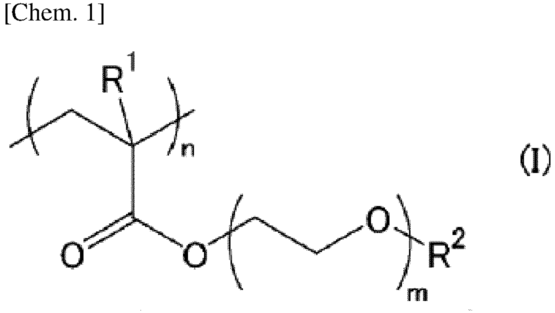 wherein R¹ represents a hydrogen atom or a methyl group, R² represents an alkyl group, m represents 1 to 5, and n represents a number of repetitions.

In the hydrophilic substrate, the hydrophilization treatment is preferably an alkali solution treatment. In the hydrophilic substrate, the hydrophilization treatment is preferably at least one selected from the group consisting of an ultraviolet ray irradiation treatment, an electron beam irradiation treatment, an ion irradiation treatment, and a plasma treatment. In the hydrophilic substrate, the hydrophilic polymer layer is preferably formed by using a hydrophilic polymer solution.

In the hydrophilic substrate, the hydrophilic polymer layer preferably has a thickness of 10 to 1000 nm.

Also, the present invention is directed to a method for producing a hydrophilic substrate, the method including: subjecting a substrate surface to a hydrophilization treatment; and forming a hydrophilic polymer layer on the hydrophilization-treated surface having undergone the hydrophilization treatment, wherein the hydrophilic polymer layer is formed of a hydrophilic polymer represented by the following formula (I): 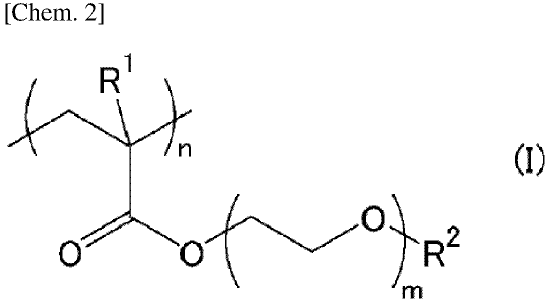 wherein R¹ represents a hydrogen atom or a methyl group, R² represents an alkyl group, m represents 1 to 5, and n represents a number of repetitions.

In the method for producing a hydrophilic substrate, the hydrophilization treatment is preferably an alkali solution treatment. In the method for producing a hydrophilic substrate, the hydrophilization treatment is preferably at least one selected from the group consisting of an ultraviolet ray irradiation treatment, an electron beam irradiation treatment, an ion irradiation treatment, and a plasma treatment. In the method for producing a hydrophilic substrate, the hydrophilic polymer layer is preferably formed by using a hydrophilic polymer solution.

In the method for producing a hydrophilic substrate, the hydrophilic polymer layer preferably has a thickness of 10 to 1000 nm.

According to the present invention, since the hydrophilic substrate is a hydrophilic substrate in which a hydrophilic polymer layer is formed on a substrate surface having undergone a hydrophilization treatment, it is possible to provide a hydrophilic substrate in which a hydrophilic polymer layer having controlled surface irregularities is formed. Therefore, improvement in the ability to capture specific cells such as cancer cells can be expected.

### BRIEF DESCRIPTION OF THE DRAWINGS

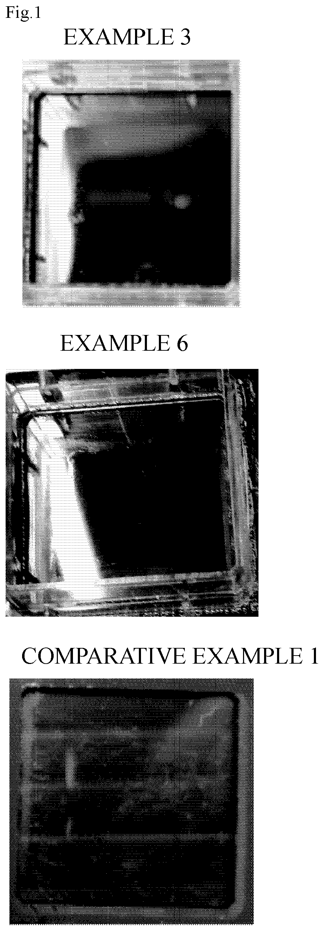

FIG. 1 shows examples of photographs of hydrophilic substrates produced in Examples 3 and 6 and Comparative Example 1.

### DESCRIPTION OF THE PREFERRED EMBODIMENTS

The hydrophilic substrate of the present invention is produced by forming a hydrophilic polymer layer on a substrate surface having undergone a hydrophilization treatment, wherein the hydrophilic polymer layer is formed of a hydrophilic polymer represented by the following formula (I): 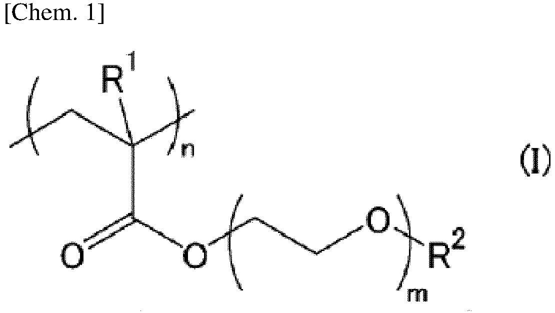 wherein R¹ represents a hydrogen atom or a methyl group, R² represents an alkyl group, m represents 1 to 5, and n represents a number of repetitions. By forming the hydrophilic polymer layer on the substrate surface having undergone a hydrophilization treatment, it is possible to provide a hydrophilic substrate that includes a coated hydrophilic polymer layer having controlled surface irregularities, small surface roughness, and high smoothness.

Tumor cells (such as cancer cells) generated in body fluid such as circulating tumor cells in blood are very small in number (several cells to several hundred cells in 1 mL of blood), and it would be important to capture as many tumor cells existing in the sampled body fluid as possible for examination. In the present invention, by coating a substrate surface having undergone a hydrophilization treatment with a hydrophilic polymer, a hydrophilic polymer layer having controlled surface irregularities, small surface roughness, and high smoothness is formed. The irregularities of the hydrophilic polymer layer influence the ability to capture specific cells such as cancer cells, and it is expected to achieve excellent ability to capture specific cells by controlling the surface irregularities and increasing the smoothness. Therefore, by measuring the number of tumor cells captured by the hydrophilic polymer layer on the substrate surface having undergone a hydrophilization treatment, the number of tumor cells in the body fluid is determined. This would be useful, for example, for confirming the therapeutic effect on cancer. Also, by culturing the captured tumor cells, and examining the efficacy of an anticancer agent or the like using the cultured cells, it is possible to confirm the efficacy of the anticancer agent or the like outside the body. This is also useful for selection of an anticancer agent or the like.

The substrate (substrate surface) having undergone a hydrophilization treatment may be prepared by subjecting a substrate surface to a hydrophilization treatment. Examples of the substrate include acrylic resins (polyacrylic resins) such as polymethyl acrylate, polymethyl methacrylate, polyacrylic acid, and polymethacrylic acid, polyester resins such as cycloolefin resin (polycycloolefin), carbonate resin (polycarbonate), styrene resin (polystyrene), and polyethylene terephthalate (PET), polydimethylsiloxane, and glass such as soda lime glass and borosilicate glass.

As the hydrophilization treatment, any method capable of executing a hydrophilization treatment on a substrate surface may be used, and examples of such a method include an alkali solution treatment, an ultraviolet ray irradiation treatment, an electron beam irradiation treatment, an ion irradiation treatment, and a plasma treatment. Among these, the alkali solution treatment and the ultraviolet ray irradiation treatment are preferred from the viewpoint of control of the irregularities of the hydrophilic polymer layer.

Examples of an alkali compound used in the alkali solution treatment (surface treatment with an alkali solution) include inorganic alkali compounds such as alkali metal hydroxides, alkali earth metal hydroxides, and aqueous ammonia, and organic alkali compounds such as tetramethyl ammonium oxide. Among these, from the viewpoint of control of the irregularities of the hydrophilic polymer layer, inorganic alkali compounds are preferred, and alkali metal hydroxides are more preferred. Examples of the alkali metal hydroxides include sodium hydroxide, potassium hydroxide, and lithium hydroxide. Examples of the alkali earth metal hydroxides include magnesium hydroxide, calcium hydroxide, and barium hydroxide. Only one alkali compound may be used, or two or more alkali compounds may be used in combination.

Examples of the alkali solution (solution of an alkali compound) include an aqueous solution and an organic solution of an alkali compound. Among these, an aqueous solution of an alkali compound (alkali aqueous solution) is preferred. The concentration of the alkali solution may be appropriately set in consideration of the efficiency of the treatment, the irregularities of the hydrophilic polymer layer, etc., and, for example, a solution of 0.01 to 5 M (mol/L) may be used. The lower limit of the concentration is preferably 0.05 M or more, more preferably 0.10 M or more. The upper limit of the concentration is preferably 4 M or less, more preferably 3 M or less.

As the method for treating the surface with an alkali solution, a method that allows contact between the alkali solution and the substrate surface may be appropriately used, and examples of such a method include a dipping method in an alkali solution, an applying method with a brush or the like, and a spraying method. The treatment temperature and the treatment time of the alkali solution treatment may be appropriately set in consideration of the irregularities of the hydrophilic polymer layer, the efficiency of the treatment, etc. For example, an appropriate treatment temperature is 5 to 80°C, and an appropriate treatment time is 1 second to 6 hours.

From the viewpoint of the irregularities of the hydrophilic polymer layer, it is preferred that the alkali solution treatment be conducted while the alkali solution is stirred or shaken. The alkali solution treatment may be conducted once or plural times, and the number of times may be appropriately set in consideration of, for example, the irregularities of the hydrophilic polymer layer.

After the alkali solution treatment, the alkali solution is removed from the substrate surface as necessary by rinsing with water, high-pressure washing, scrub washing, or the like, and a drying treatment or the like is conducted.

The ultraviolet ray irradiation treatment may be conducted by using a known ultraviolet ray irradiation apparatus. An example of the apparatus is an apparatus equipped with a light source, a lighting fixture, a power source, a cooler, a conveyer, etc. Examples of the light source include a mercury lamp, a metal halide lamp, a potassium lamp, a mercury xenon lamp, and a flash lamp. The wavelength of the light source and the conditions of the ultraviolet ray irradiation are not particularly limited, and may be appropriately selected.

The electron beam irradiation treatment is a generic term for treatment of irradiating with electrons, and examples of the electron beam irradiation treatment include discharge phenomenon such as ark discharge and corona discharge, and a γ-ray irradiation treatment. The acceleration voltage may be appropriately selected in consideration of, for example, a damage to the substrate.

Examples of the ion irradiation treatment include known methods such as hydrogen ion irradiation and argon ion irradiation. Examples of the plasma treatment include known methods such as hydrogen plasma irradiation and argon plasm irradiation. The irradiation conditions may be appropriately selected in consideration of, for example, a damage to the substrate.

At least part (part or the whole) of the substrate surface having undergone the hydrophilization treatment (in which the hydrophilic polymer layer has not been formed) has a contact angle of water of preferably 50 degrees or less, more preferably 40 degrees or less. The lower limit of the contact angle is not particularly limited, and a smaller contact angle is better. In the present description, the contact angle of water may be measured by the method described in the later-described examples.

As the hydrophilic polymer that forms the hydrophilic polymer layer, those having hydrophilicity may be appropriately selected. Examples of the hydrophilic polymer homopolymers and copolymers of one or two or more hydrophilic monomers, and copolymers of one or two or more hydrophilic monomers and another monomer. Only one hydrophilic polymer may be used, or two or more hydrophilic polymers may be used in combination.

Examples of homopolymers and copolymers of the hydrophilic monomer include polyacrylic acid, polyacrylic acid ester, polymethacrylic acid, polymethacrylic acid ester, polyacryloylmorpholine, polymethacryloylmorpholine, polyacrylamide, polymethacylamide, polyalkoxyalkylacrylate, and polyalkoxyalkylmethacrylate.

As the hydrophilic monomer in a copolymer of the hydrophilic monomer and the other monomer, various monomers having a hydrophilic group may be used. Examples of the hydrophilic group include known hydrophilic groups such as an amide group, a sulfate group, a sulfonic group, a carboxylic group, a hydroxyl group, an amino group, and an oxyethylene group.

Specific examples of the hydrophilic monomer include (meth)acrylic acid, (meth)acrylic acid ester (alkoxyalkyl (meth)acrylates such as methoxyethyl (meth)acrylate, hydroxyalkyl (meth)acrylates such as hydroxyethyl (meth)acrylate), (meth)acrylamide, and (meth)acrylamide derivatives having a cyclic group (such as (meth)acryloylmorpholine). Among these, (meth)acrylic acid, (meth)acrylic acid ester, alkoxyalkyl (meth)acrylates, and (meth)acryloylmorphorine are preferred, and alkoxyalkyl (meth)acrylates are more preferred, and 2-methoxyethylacrylate is particularly preferred.

The other monomer in a copolymer of the hydrophilic monomer and the other monomer may be appropriately selected such that the effect of the hydrophilic polymer is inhibited. Examples of the other monomer include aromatic monomers such as styrene, vinyl acetate, and N-isopropyl acrylamide capable of imparting temperature responsiveness.

Among these, at least one selected from the group consisting of a polymer represented by the following formula (I) and poly(meth)acryloylmorpholine is preferred as the hydrophilic polymer. 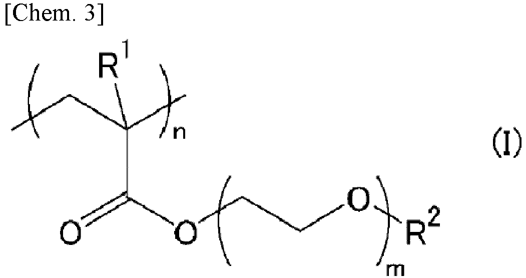 (wherein R¹ represents a hydrogen atom or a methyl group, R² represents an alkyl group, m represents 1 to 5, and n represents a number of repetitions.)

The number of carbons in the alkyl group of R² is preferably 1 to 10, more preferably 1 to 5. Among these, R² is particularly preferably a methyl group or an ethyl group. m is preferably 1 to 3. n (number of repetitions) is preferably 70 to 2500, more preferably 90 to 1500.

As the hydrophilic polymer, copolymers of at least one hydrophilic monomer selected from the group consisting of a compound represented by the following formula (I-1) and (meth)acryloylmorpholine, and the other monomer can also be preferably used. 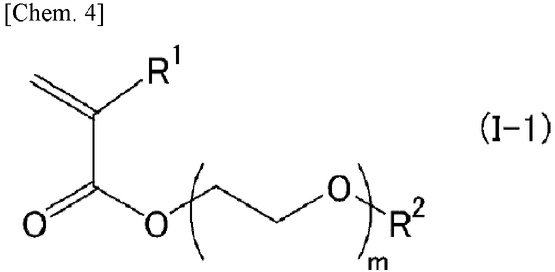 (wherein R¹, R², and m are as defined above.)

Among the aforementioned hydrophilic polymers, the hydrophilic polymer represented by the formula (I) is particularly preferred from the viewpoint of the irregularities of the hydrophilic polymer layer.

The film thickness of the hydrophilic polymer layer (layer formed of a hydrophilic polymer) is preferably 10 to 1000 nm, more preferably 30 to 700 nm, further preferably 50 to 350 nm. By adjusting the film thickness within the above range, it is possible to expect low adsorptivity to good proteins or cells, and the ability to selectively capture cancer cells.

At least part (part or the whole) of the surface of the hydrophilic polymer layer (surface of the hydrophilic polymer layer in the hydrophilic substrate) has a contact angle of water of preferably 70 degrees or less, more preferably 60 degrees or less. The lower limit of the contact angle is not particularly limited, and a smaller contact angle is better.

The surface of the hydrophilic polymer layer (surface of the hydrophilic polymer layer in the hydrophilic substrate) has a surface roughness Ra of preferably 0.50 or less, more preferably 0.35 or less, further preferably 0.30 or less. The lower limit of the surface roughness Ra is not particularly limited, and a smaller surface roughness is better. In the present specification, the surface roughness Ra is a center line surface roughness Ra defined by JIS B0601-2001.

A hydrophilic substrate in which a polymer layer formed of a hydrophilic polymer is formed (hydrophilic substrate in which a hydrophilic polymer layer formed of a hydrophilic polymer is formed on the surface) can be produced by coating the whole or part of the substrate surface having undergone a hydrophilization treatment with a hydrophilic polymer solution or dispersion by a known method such as (1) a method of injecting a hydrophilic polymer solution or dispersion prepared by dissolving or dispersing a hydrophilic polymer in various solvents to the substrate surface (recess parts of the substrate) having undergone a hydrophilization treatment, and retaining the substrate surface for a predetermined time, and drying the substrate surface, or (2) a method of applying (spraying) the hydrophilic polymer solution or dispersion onto the substrate surface. Then, by adding other components as necessary to the hydrophilic substrate in which a hydrophilic polymer layer is formed on the substrate surface having undergone a hydrophilization treatment, it is possible to produce a device capable of, for example, capturing, culturing, or examining specific cells.

Conventionally known materials and methods may be used as the solvent, injection method, application (spray) method, etc. The retention time and the drying time in (1) and (2) may be appropriately set depending on the size of the substrate, the kind of the liquid to be introduced, etc. The retention time is preferably 10 seconds to 10 hours, more preferably 1 minute to 5 hours, further preferably 5 minutes to 2 hours. The drying is conducted, preferably at room temperature (about 23°C) to 80°C, more preferably at room temperature to 40°C. The drying may be conducted under reduced pressure. Furthermore, after a certain time from start of retention, the excess hydrophilic polymer solution or dispersion may be appropriately discharged before drying.

Any solvent capable of dissolving a hydrophilic polymer may be used without particular limitation, and the solvent may be appropriately selected depending on the hydrophilic polymer to be used. Examples of the solvent include water, organic solvents, and mixed solvents thereof, and examples of the organic solvents include alcohols such as methanol, ethanol, n-propanol, i-propanol, and methoxypropanol, ketones such as acetone and methylethylketone, tetrahydrofuran, acetonitrile, ethyl acetate, and toluene.

The method for producing a hydrophilic substrate according to the present invention includes subjecting a substrate surface to a hydrophilization treatment, and then forming a hydrophilic polymer layer on the hydrophilization-treated surface that has undergone the hydrophilization treatment. As described above, by subjecting a substrate surface to a hydrophilization treatment and then forming a hydrophilic polymer layer on the hydrophilization-treated surface that has undergone the treatment, it is possible to form a hydrophilic polymer layer having controlled surface irregularities, small surface roughness, and high smoothness.

For example, it is expected to capture specific cells by bringing a sample (blood or body fluid) into contact with the hydrophilic substrate in which the hydrophilic polymer layer is formed on the substrate surface having undergone a hydrophilization treatment. Then, by measuring the number of specific cells captured, the number of the specific cells in the sampled blood or body fluid is determined, so that it is expected to, for example, confirm the therapeutic effect on cancer.

### EXAMPLES

Hereinafter, the present invention will be specifically described on the basis of examples, however, it is to be noted that the present invention is not limited to these examples.

### (Production of hydrophilic polymer)

Using a 12.5 mg/mL AIBN (azobisisobutyronitrile) solution in toluene, 2-methoxyethylacrylate (25 wt% toluene) was thermally polymerized at 60°C for 7 hours, to produce poly 2-methoxyethyl acrylate (PMEA).

### (Example 1)

A 1 N NaOH aqueous solution was added to a slide chamber (bottom face: made of soda lime glass), and the slide chamber was allowed to stand for 1 hour. Then, the chamber surface was washed with water and air dried (substrate having undergone a hydrophilization treatment).

A 0.25% solution of the produced PMEA in methanol was poured into the slide chamber having undergone the hydrophilization treatment. Thereafter, the slide chamber was immediately vacuum dried for 5 minutes in an oven at 40°C to produce a hydrophilic substrate.

### (Example 2)

A 1 N NaOH aqueous solution was added to a slide chamber (bottom face: made of soda lime glass), and the slide chamber was shaken once every 20 minutes to stir the NaOH aqueous solution. After the slide chamber was allowed to stand for 1 hour (a total number of shaking: three times), the chamber surface was washed with water and air dried (substrate having undergone a hydrophilization treatment).

A 0.25% solution of the produced PMEA in methanol was poured into the slide chamber having undergone the hydrophilization treatment. Thereafter, the slide chamber was immediately vacuum dried for 5 minutes in an oven at 40°C to produce a hydrophilic substrate.

### (Example 3)

A 1 N NaOH aqueous solution was added to a slide chamber (bottom face: made of soda lime glass), and the slide chamber was shaken once every 20 minutes to stir the NaOH aqueous solution. After the slide chamber was allowed to stand for 1 hour (a total number of shaking: three times), the chamber surface was washed with water and air dried (substrate having undergone a hydrophilization treatment).

A 0.35% solution of the produced PMEA in methanol was poured into the slide chamber having undergone the hydrophilization treatment. Thereafter, the slide chamber was immediately vacuum dried for 5 minutes in an oven at 40°C to produce a hydrophilic substrate.

### (Example 4)

A slide chamber (bottom face: made of soda lime glass) was irradiated with UV for 10 minutes using a UV irradiation apparatus provided with a low-pressure mercury lamp (HMW-615N-4, manufactured by ORC MANUFACTURING CO., LTD.). After 1 hour (substrate having undergone a hydrophilization treatment), a 0.25% solution of the produced PMEA in methanol was poured into the slide chamber having undergone the hydrophilization treatment. Thereafter, the slide chamber was immediately vacuum dried for 5 minutes in an oven at 40°C to produce a hydrophilic substrate.

### (Example 5)

A slide chamber (bottom face: made of soda lime glass) was irradiated with UV for 10 minutes using a UV irradiation apparatus provided with a low-pressure mercury lamp (HMW-615N-4, manufactured by ORC MANUFACTURING CO., LTD.). After 10 minutes (substrate having undergone a hydrophilization treatment), a 0.25% solution of the produced PMEA in methanol was poured into the slide chamber having undergone the hydrophilization treatment. Thereafter, the slide chamber was immediately vacuum dried for 5 minutes in an oven at 40°C to produce a hydrophilic substrate.

### (Example 6)

A slide chamber (bottom face: made of soda lime glass) was irradiated with UV for 10 minutes using a UV irradiation apparatus provided with a low-pressure mercury lamp (HMW-615N-4, manufactured by ORC MANUFACTURING CO., LTD.). After 10 minutes (substrate having undergone a hydrophilization treatment), a 0.35% solution of the produced PMEA in methanol was poured into the slide chamber having undergone the hydrophilization treatment. Thereafter, the slide chamber was immediately vacuum dried for 5 minutes in an oven at 40°C to produce a hydrophilic substrate.

### (Comparative Example 1)

A 0.25% solution of the produced PMEA in methanol was poured into an untreated slide chamber. Thereafter, the slide chamber was immediately vacuum dried for 5 minutes in an oven at 40°C to produce a hydrophilic substrate.

### [Contact angle of water (substrate having undergone hydrophilization treatment)]

To a surface of a substrate having undergone a hydrophilization treatment, 2 µL of distilled water was dropped, and a contact angle after 30 seconds was measured by the θ/2 method (room temperature).

The contact angle was measured 1 hour after the UV treatment for Example 4, and measured 10 minutes after the UV treatment for Examples 5 and 6. The effect of the hydrophilization by the UV treatment decreased with time, and the contact angle exceeded 10 degrees after 3 hours.

### [Contact angle of water (hydrophilic substrate)]

To a surface of a produced hydrophilic substrate (surface of a hydrophilic polymer layer), 2 µL of distilled water was dropped, and a contact angle after 30 seconds was measured by the θ/2 method (room temperature).

### [Film thickness of hydrophilic polymer layer (coating layer)]

The film thickness of the hydrophilic polymer layer of the hydrophilic substrate was determined by measuring (imaging) a cross-section of the hydrophilic polymer layer at an acceleration voltage of 15 kV, at a magnification of 1000 times by using a TEM.

### [Surface roughness Ra]

Surface roughness was measured in a noncontact manner using a laser microscope at four points on one hydrophilic substrate (hydrophilic polymer layer) (first peak), and the average of Ra at the four points was determined as surface roughness Ra (average of center line surface roughness Ra defined by JIS B0601-2001).

**[Table 1]**

| | Example 1 | Example 2 | Example 3 | Example 4 | Example 5 | Example 6 | Comprative Example 1 |
|---|---|---|---|---|---|---|---|
| Contact angle of water (°) on substrate surface having undergone hydrophilization treatment | 37.4 | 35.4 | 35.4 | 6.7 | 4.6 | 4.6 | 60.8 |
| Contact angle of water (°) on surface of hydrophilic polymer layer | 43 | 42 | 54 | 43 | 42 | 51 | 48 |
| Film thickness (mm) of hydrophilic polymer layer (coating layer) | 140 | 132 | 233 | 127 | 118 | 215 | 165 |
| Surface roughness (Ra) | 0.253 | 0.235 | 0.189 | 0.242 | 0.231 | 0.177 | 0.386 |

Among the hydrophilic substrates produced in Examples 1 to 6 and Comparative Example 1, photographs of the hydrophilic substrates in Examples 3 and 6 and Comparative Example 1 are shown in FIG. 1.

In Comparative Example 1, the entire substrate was fogged in pale white. Regarding the white fog, when poly 2-methoxyethyl acrylate was produced several times in the same manner as in Comparative Example 1, white fog was sometimes observed in a ring shape or in a mottled pattern, but a whitely fogged part was consistently formed.

In contrast to this, in Examples 1 to 6 using the substrate having undergone a hydrophilization treatment, entirely less or no fog was observed (almost no fog was observed in those treated with a 0.35% (higher PMEA solution concentration) methanol solution), and a coating film having controlled surface irregularities was formed. The foggy part reflects the state of aggregation of poly 2-methoxyethylacrylate and the surface irregularities, and it is easy to imagine that such a part exhibits ability to capture specific cells that is different from that of the remaining smooth part. This causes variation in capturing ability. Therefore, it was expected that an unfoggy surface having controlled irregularities (Ra is 0.3 or less) exhibits capturing ability with less variation.

## Claims

1. A hydrophilic substrate in which a hydrophilic polymer layer is formed on a substrate surface having undergone a hydrophilization treatment,
wherein the hydrophilic polymer layer is formed of a hydrophilic polymer represented by the following formula (I): 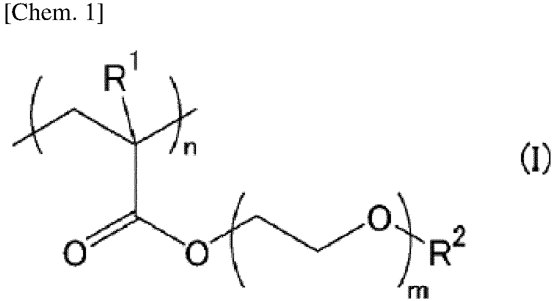 wherein R¹ represents a hydrogen atom or a methyl group, R² represents an alkyl group, m represents 1 to 5, and n represents a number of repetitions.

2. The hydrophilic substrate according to claim 1, wherein the hydrophilization treatment is an alkali solution treatment.

3. The hydrophilic substrate according to claim 1, wherein the hydrophilization treatment is at least one selected from the group consisting of an ultraviolet ray irradiation treatment, an electron beam irradiation treatment, an ion irradiation treatment, and a plasma treatment.

4. The hydrophilic substrate according to any one of claims 1 to 3, wherein the hydrophilic polymer layer is formed by using a hydrophilic polymer solution.

5. The hydrophilic substrate according to any one of claims 1 to 4, wherein the hydrophilic polymer layer has a thickness of 10 to 1000 nm.

6. A method for producing a hydrophilic substrate, the method comprising:
subjecting a substrate surface to a hydrophilization treatment; and forming a hydrophilic polymer layer on the hydrophilization-treated surface having undergone the hydrophilization treatment, wherein the hydrophilic polymer layer is formed of a hydrophilic polymer represented by the following formula (I): 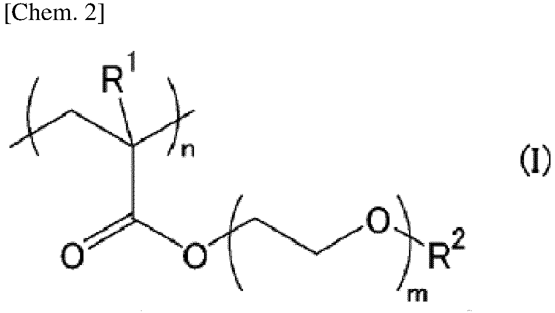 wherein R¹ represents a hydrogen atom or a methyl group, R² represents an alkyl group, m represents 1 to 5, and n represents a number of repetitions.

7. The method for producing a hydrophilic substrate according to claim 6,
wherein the hydrophilization treatment is an alkali solution treatment.

8. The method for producing a hydrophilic substrate according to claim 6,
wherein the hydrophilization treatment is at least one selected from the group consisting of an ultraviolet ray irradiation treatment, an electron beam irradiation treatment, an ion irradiation treatment, and a plasma treatment.

9. The method for producing a hydrophilic substrate according to any one of claims 6 to 8, wherein the hydrophilic polymer layer is formed by using a hydrophilic polymer solution.

10. The method for producing a hydrophilic substrate according to any one of claims 6 to 9, wherein the hydrophilic polymer layer has a thickness of 10 to 1000 nm.

## Patentansprüche

1. Hydrophiles Substrat, in welchem eine hydrophile Polymerschicht auf einer Substratoberfläche gebildet ist, die einer Hydrophilisierungsbehandlung unterzogen worden ist,
wobei die hydrophile Polymerschicht mit einem durch die folgende Formel (I) dargestellten hydrophilen Polymer gebildet ist: 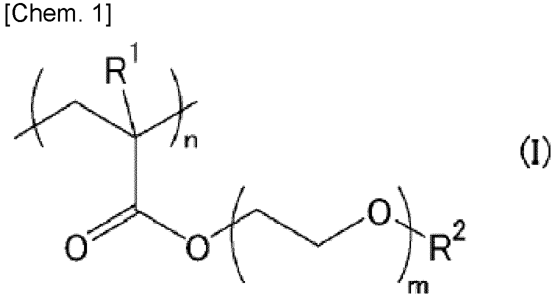 wobei R¹ ein Wasserstoffatom oder eine Methylgruppe ist, R² eine Alkylgruppe darstellt, m 1 bis 5 darstellt, und n eine Anzahl an Wiederholungen darstellt.

2. Hydrophiles Substrat nach Anspruch 1, wobei die Hydrophilisierungsbehandlung eine Behandlung mit Alkalilösung ist.

3. Hydrophiles Substrat nach Anspruch 1, wobei die Hydrophilisierungsbehandlung mindestens eine ist, welche ausgewählt ist aus der Gruppe bestehend aus einer Ultraviolettlichtbestrahlungs-Behandlung, einer Elektronenstrahlbestrahlungs-Behandlung, einer Ionenbestrahlungs-Behandlung und einer Plasma-Behandlung.

4. Hydrophiles Substrat nach einem der Ansprüche 1 bis 3, wobei die hydrophile Polymerschicht unter Verwendung einer Lösung eines hydrophilen Polymers gebildet ist.

5. Hydrophiles Substrat nach einem der Ansprüche 1 bis 4, wobei die hydrophile Polymerschicht eine Dicke von 10 bis 1000 nm aufweist.

6. Verfahren zur Herstellung eines hydrophilen Substrats, wobei das Verfahren umfasst:
eine Substratoberfläche einer Hydrophilisierungsbehandlung zu unterziehen; und Bilden einer hydrophilen Polymerschicht auf der hydrophilisierungsbehandelten Oberfläche, die der Hydrophilisierungsbehandlung unterzogen worden ist, wobei die hydrophile Polymerschicht mit einem durch die folgende Formel (I) dargestellten hydrophilen Polymer gebildet wird: 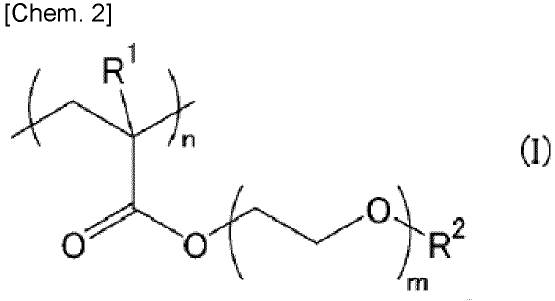 wobei R¹ ein Wasserstoffatom oder eine Methylgruppe darstellt, R² eine Alkylgruppe darstellt, m 1 bis 5 darstellt, und n eine Anzahl an Wiederholungen darstellt.

7. Verfahren zur Herstellung eines hydrophilen Substrats nach Anspruch 6, wobei die Hydrophilisierungsbehandlung eine Behandlung mit Alkalilösung ist.

8. Verfahren zur Herstellung eines hydrophilen Substrats nach Anspruch 6, wobei die Hydrophilisierungsbehandlung mindestens eine ist, welche ausgewählt ist aus der Gruppe bestehend aus einer Ultraviolettlichtbestrahlungs-Behandlung, einer Elektronenstrahlbestrahlungs-Behandlung, einer Ionenbestrahlungs-Behandlung und einer Plasma-Behandlung.

9. Verfahren zur Herstellung eines hydrophilen Substrats nach einem der Ansprüche 6 bis 8, wobei die hydrophile Polymerschicht unter Verwendung einer Lösung eines hydrophilen Polymers gebildet wird.

10. Verfahren zur Herstellung eines hydrophilen Substrats nach einem der Ansprüche 6 bis 9, wobei die hydrophile Polymerschicht eine Dicke von 10 bis 1000 nm aufweist.

## Revendications

1. Substrat hydrophile dans lequel une couche de polymère hydrophile est formée sur une surface de substrat ayant subi un traitement d'hydrophilisation, la couche de polymère hydrophile étant formée d'un polymère hydrophile représenté par la formule (I) suivante : 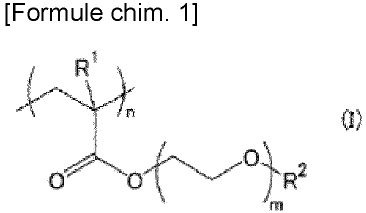 dans laquelle R¹ représente un atome d'hydrogène ou un groupe méthyle, R² représente un groupe alkyle, m représente 1 à 5 et n représente un nombre de répétitions.

2. Substrat hydrophile selon la revendication 1, dans lequel le traitement d'hydrophilisation est un traitement en solution alcaline.

3. Substrat hydrophile selon la revendication 1, dans lequel le traitement d'hydrophilisation est au moins un choisi dans le groupe constitué par un traitement par irradiation de rayons ultraviolets, un traitement d'irradiation par faisceau d'électrons, un traitement d'irradiation d'ions et un traitement de plasma.

4. Substrat hydrophile selon l'une quelconque des revendications 1 à 3, dans lequel la couche de polymère hydrophile est formée en utilisant une solution de polymère hydrophile.

5. Substrat hydrophile selon l'une quelconque des revendications 1 à 4, dans lequel la couche de polymère hydrophile a une épaisseur de 10 à 1 000 nm.

6. Procédé de production d'un substrat hydrophile, le procédé comprenant les étapes consistant à :
soumettre une surface de substrat à un traitement d'hydrophilisation ; et former une couche de polymère hydrophile sur la surface traitée par lyophilisation ayant subi le traitement d'hydrophilisation, la couche de polymère hydrophile étant formée d'un polymère hydrophile représenté par la formule (I) suivante : 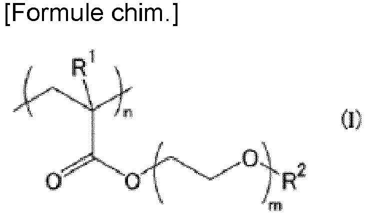 dans laquelle R¹ représente un atome d'hydrogène ou un groupe méthyle, R² représente un groupe alkyle, m représente 1 à 5, et n représente un nombre de répétitions.

7. Procédé de production d'un substrat hydrophile selon la revendication 6, dans lequel le traitement d'hydrophilisation est un traitement en solution alcaline.

8. Procédé de production d'un substrat hydrophile selon la revendication 6, dans lequel le traitement d'hydrophilisation est au moins un choisi dans le groupe constitué par un traitement d'irradiation de rayons ultraviolets, un traitement d'irradiation par faisceau d'électrons, un traitement d'irradiation d'ions et un traitement de plasma.

9. Procédé de production d'un substrat hydrophile selon l'une quelconque des revendications 6 à 8, dans lequel la couche de polymère hydrophile est formée en utilisant une solution de polymère hydrophile.

10. Procédé de production d'un substrat hydrophile selon l'une quelconque des revendications 6 à 9, dans lequel la couche de polymère hydrophile a une épaisseur de 10 à 1 000 nm.
